Europäisches Patentamt

European Patent Office

Office européen des brevets

(19)

(11) **EP 0 958 105 B1**

(12) **FASCICULE DE BREVET EUROPEEN**

(45) Date de publication et mention
de la délivrance du brevet:
**12.06.2002 Bulletin 2002/24**

(51) Int Cl.$^7$: **B23Q 39/02**, B23Q 1/26,
B23Q 1/70, B23Q 5/40

(21) Numéro de dépôt: **98902040.9**

(22) Date de dépôt: **08.01.1998**

(86) Numéro de dépôt international:
**PCT/FR98/00023**

(87) Numéro de publication internationale:
**WO 98/31502 (23.07.1998 Gazette 1998/29)**

(54) **DISPOSITIF D'USINAGE PAR ENLEVEMENT DE COPEAUX, A BLOC MASSIF ET COLONNE COULISSANTE, ET MACHINE INCORPORANT CE DISPOSITIF**

BEARBEITUNGSVORRICHTUNG ZUR SPANENDEN METALLBEARBEITUNG, MIT MASSIVEM BLOCK UND GLEITENDER SÄULE, SOWIE MASCHINE MIT DIESEM MASSIVEN BLOCK UND GLEITENDER SÄULE, SOWIE MASCHINE MIT DIESER VORRICHTUNG

METAL CUTTING MACHINING DEVICE, WITH MASSIVE BLOCK AND SLIDING COLUMN, AND MACHINE INTEGRATING THIS DEVICE

(84) Etats contractants désignés:
**AT CH DE ES GB IT LI**

(30) Priorité: **20.01.1997 FR 9700708**

(43) Date de publication de la demande:
**24.11.1999 Bulletin 1999/47**

(73) Titulaire: **Delacou, Jean-Michel**
**85130 Tiffauges (FR)**

(72) Inventeur: **Delacou, Jean-Michel**
**85130 Tiffauges (FR)**

(74) Mandataire: **Dawidowicz, Armand**
**Cabinet Dawidowicz**
**38/40 Allée du Closeau**
**ZI des Richardets**
**93166 Noisy Le Grand Cedex (FR)**

(56) Documents cités:
**EP-A- 0 172 299      US-A- 3 263 530**
**US-A- 4 604 008**

EP 0 958 105 B1

# Description

La présente invention concerne un dispositif d'usinage d'une pièce par enlèvement de copeaux, faisant partie d'une machine d'usinage et comportant un moyen de déplacement longitudinal et de positionnement. Il peut s'agir d'usiner une pièce, par exemple métallique, soit cylindrique (par tournage, perçage, arasage, rectification cylindrique) ou non (par fraisage, perçage, rectification) en vue d'obtenir une pièce de forme et de dimensions prédéterminées.

Les machines d'usinage ou machines-outils connues à ce jour sont constituées d'une base de support au sol supportant ou intégrant un banc de support des éléments de guidage. Ces éléments de guidage sont réalisés sous la forme de glissières de sections parallélépipédiques -généralement rectangulaires- de faible raideur et donc devant être supportées sur toute leur longueur par un banc qui assure ainsi la précision et la ngidité de la machine. Ce banc couvre ainsi généralement toute la surface de la machine et constitue un obstacle à la bonne évacuation des copeaux.

Pour remédier à cet inconvénient, certaines machines de tournage ont été conçues avec un banc incliné sur l'opérateur ou vertical. Dans cette configuration, ce dernier constitue une gêne pour le chargement ou le déchargement de la machine. En particulier lors de l'implantation de lignes automatisées:

- il interdit l'obtention d'un flux naturel de pièces ayant un point de sortie différent de celui d'entrée, d'où des implantations d'usines moins optimisées;
- il impose l'implantation du robot de chargement sur la même face de la machine que l'opérateur, d'où des difficultés d'accès pour effectuer les réglages ou la maintenance.

Situés dans le flux des copeaux et des liquides de coupe, ces bancs et leurs systèmes de guidage nécessitent une protection. Cette protection, nécessairement télescopique pour admettre les mouvements de la machine et donc très coûteuse, est difficilement compatible avec des vitesses et des accélérations élevées. Utilisées dans un environnement de grande production, par exemple pour l'usinage de pièces pour l'automobile, ces protections se déforment rapidement et offrent ainsi des passages à la pénétration des copeaux qui altèrent la fiabilité et la durée de vie de la machine. Après un certain temps d'utilisation, elles constituent plus un obstacle à l'évacuation et au nettoyage des copeaux qu'une réelle barrière contre l'agressivité mécanique de ceux-ci.

Certaines machines de tournage ont été conçues avec un banc retourné vers l'arrière de la poupée tout en conservant des guidages sur glissières. La protection limitant la zone des copeaux par rapport à la zone de précision mécanique reste cependant très délicate à réaliser et le nettoyage des copeaux ayant réussi à pénétrer est quasiment impossible.

De plus, par leur présence, ces bancs figent la configuration des axes, des broches et des mouvements des outils ou des pièces par rapport au sol, ainsi que leurs positionnements relatifs.

Dans les machines multibroches de fraisage ou de pointage perçage, il est très important pour le maintien de la précision sous l'effort de coupe que la résultante des efforts exercés sur les guidages par l'effort de coupe soit centrée par rapport aux guidages pour qu'ils n'engendrent aucune déviation de la position de l'axe de la broche. Ceci est très délicat à obtenir avec des guidages par règles ou conduit à des structures de support de règles en " U " donc ouvertes et peu rigides.

Un profil de guidage doit présenter des caractéristiques mécaniques suffisantes pour assurer un bon fonctionnement et une bonne précision des machines, à savoir :

1- doit présenter une raideur maximale à la flexion pour encaisser les efforts de coupe et réaliser avec la masse du système de tourelle de changement d'outils et la commande des axes complémentaires (par exemple les axes X, Y, Z), avec l'outil fixé en extrémité de la broche et la broche d'un centre d'usinage ou avec la masse de tout autre système d'usinage ou de prise de pièces fixé à son extrémité, un ensemble dont la fréquence propre de vibration est suffisamment élevée pour ne pas perturber le processus de coupe.

2- Sa raideur à la torsion doit être suffisante pour, tout en encaissant le couple de renversement dû à l'effort de coupe, ne pas affecter la précision de la machine.

3- Sa masse doit être faible pour obtenir de manière économique des vitesses et des accélérations compatibles avec la définition actuelle des machines dites " agiles " à savoir: vitesse = 1 m/s et accélération =10 m.s$^{-2}$.

4- Sa forme doit être simple, cylindrique, et son profil le plus constant possible pour pouvoir l'usiner par rectification et développer des paliers de guidage hydrostatiques (suppression de l'usure), ainsi qu'une protection efficace à la pénétration des copeaux dans les paliers par simple raclage sur un profil continu.

5- Sa forme doit pouvoir, sans addition d'un système de guidage complémentaire, assurer la position angulaire du système fixé à l'extrémité de cette colonne.

Les points 1, 2, 3 et 4 sont avantageusement optimisés par l'utilisation d'une colonne cylindrique de profil circulaire, celui-ci présentant un moment d'inertie maximal pour une masse minimale. Cette solution a déjà été utilisée pour la constitution de guidage fixé sur un banc. Par contre, nécessitant un système de positionnement angulaire complémentaire, elle ne satisfait pas le point 5, condition indispensable pour simplifier les protections aux copeaux.

En effet, un guidage prismatique supplémentaire revient :

- soit à envisager un banc présentant des rétentions de copeaux et nécessitant l'utilisation de protecteurs télescopiques incompatibles avec une bonne fiabilité de fonctionnement dans un environnement de grande production ;
- soit à utiliser un système de clavette ou tout autre système d'anti-rotation connu à ce jour qui, suivant sa position :

  - à l'avant : constitue une difficulté de raclage et d'étanchéité non conforme au point 4,
  - à l'arrière : constitue une dissymétrie de la prise du couple créant ainsi une excentration et une flexion de la colonne néfaste à la haute précision désirée.

Le document US 4 604 008 A fait connaître un dispositif d'usinage comportant dans un châssis classique un moyen de déplacement longitudinal avec blocage en rotation grâce à une section quadrilobée, l'ensemble étant lui-même susceptible d'être entraîné en rotation. Le document US 3 263 530 A montre une tête de dispositif de forage de précision à section quadrilobée. Le document EP 0 172 299 A montre une machine-outil compacte. Aucun d'eux ne permet de se dispenser d'un banc.

La présente invention a pour but de proposer un dispositif d'usinage remédiant aux inconvénients résultant de l'utilisation de banc supportant des règles de guidage d'éléments mobiles, et aux défauts de profils de guidage utilisés à ce jour.

Le dispositif conforme à l'invention comporte un bloc massif dans un premier forage duquel est logée une colonne coulissante guidée dans un palier avant et un palier arrière, au moins le palier avant et la section de colonne glissant dans celui-ci étant de section continûment convexe à trois lobes répartis à 120° autour d'un axe central, une broche , de préférence à moteur intégré, étant positionnée dans un second forage dudit bloc massif.

Ainsi, selon l'invention, le banc est supprimé et remplacé par un bloc massif de matériau dense et peu coûteux, par exemple un bloc de granit naturel ou reconstitué (matériau composite constitué de gravillons de granit assemblés par un liant de type résine chimique), le bloc supportant le guidage particulier de l'invention permettant de travailler en porte-à-faux.

Avantageusement, pour des raisons de simplicité d'obtention de la précision des pièces usinées sans faire appel à des logiciels de compensation de dilatation sophistiqués, le coefficient de dilatation du bloc est proche de celui de l'acier, à savoir de l'ordre de $10.10^{-6}$ mètre par mètre et par degré Celsius.

Avantageusement, le bloc présente deux faces opposées parfaitement planes et parallèles, permettant de fixer et de régler la position relative des paliers de guidage de la ou des colonnes mobiles.

Le bloc peut comporter d'autres forages, qui peuvent loger diverses colonnes coulissantes du même type que la colonne principale ou de type différent, ou bien une broche, ou tout autre dispositif.

Les forages, sans précision dimensionnelle, permettent le passage de colonnes de guidage d'un palier vers l'autre.

Le bloc peut être positionné, soit horizontalement (axes des forages horizontaux, faces planes verticales), ce qui permet d'assembler une machine frontale, ou une machine de tournage avec contre-pointe pour un tour, ou une unité de fraisage à broche horizontale pour un centre d'usinage; soit verticalement dans le but d'usiner des pièces dont l'axe naturel de convoyage et de manutention est vertical (pièces plates).

Selon l'invention, le même bloc peut supporter, en particulier :

soit une colonne de guidage seule, supportant une broche à moteur intégré, par exemple de tournage, de fraisage, de rectification, laquelle broche peut présenter plusieurs degrés de liberté vis-à-vis du mouvement de la colonne ;

soit une colonne de guidage seule supportant une tourelle porte-outils pouvant présenter plusieurs degrés de liberté vis-à-vis du mouvement de la colonne ;

soit une broche fixe intégrée ou une colonne de guidage supportant une broche à moteur intégré, ainsi qu'une ou plusieurs colonnes de guidage supportant une tourelle porte-outils pouvant présenter plusieurs degrés de liberté.

L'assemblage de deux ou plusieurs blocs entre eux par des entretoises rigides et suffisamment dimensionnées permet d'obtenir des machines multibroches dont la position relative des broches n'est due qu'à la forme et à la dimension de pièces statiques peu coûteuses.

On comprend qu'un bloc conforme à l'invention constitue un élément standardisé, jouant le rôle d'une unité centrale. Plusieurs unités centrales permettent d'assembler des ensembles possédant de 1 à 4 unités de coupe simultanées, ensembles intégrés dans une machine à 1 broche dont l'axe est positionné indifféremment horizontalement ou verticalement, ou à 2 broches horizontales face-à-face ou parallèles, synchronisées ou indépendantes. Ce concept peut par juxtaposition de modules, être étendu à toute une ligne complète d'usinage. Il permet la commercialisation de l'unité centrale seule, la machine complète pouvant être étudiée et assemblée autour de celle-ci par un partenaire industriel, tout en pouvant garantir le niveau de précision et de performance.

Le profil de guidage particulier utilisé selon l'invention est un cylindre à profil optimisé entre une section triangulaire assurant un bon passage des couples de renversement et un bon positionnement angulaire, et une section circulaire présentant la meilleure rigidité et la meilleure usinabilité. Dans un contexte différent, une telle forme (appelée quelquefois "polygon" ou "épitrochoïdale") a été utilisée pour la réalisation du guidage de têtes de forage, selon le document WO-A-93/15299. L'utilisation d'une section multi-lobe continûment non concave pour un guidage mécanique sans précision mais assurant un passage de couple important peut être étendue par la présente invention à un guidage hydrostatique assurant une précision compatible avec les normes de précision exceptionnelle relatives aux structures de guidages des machines-outils.

Selon l'invention, l'utilisation d'un cylindre de forme trilobée continûment convexe présente une répartition des pressions de guidage dont la résultante est parfaitement centrée.

De plus, la localisation des zones de pression autour des trois lobes permet d'optimiser la position des points d'injection du fluide dans les paliers hydrostatiques et ainsi de limiter le coût de la centrale de pression.

Un tel profil peut donc constituer le guidage du mouvement principal d'une unité de coupe indépendante prête à être intégrée dans tout bien d'équipement dédié à l'usinage ou, en intégrant une broche clans le bloc de base, constituer le guidage du mouvement Z (parallèle à l'axe de broche) de la broche (machine à poupées ou broches mobiles) ou du porte outil (machine à poupées fixes), mais également avantageusement supporter la contre-pointe d'une machine de tournage pour l'usinage de pièces longues ayant besoin d'un soutien à l'extrémité opposée à la prise de pièces ou tout autre système de tenue ou de manutention des pièces. Une telle configuration laisse à l'implanteur d'une ligne d'usinage de nombreuses possibilités d'implantation d'un système de chargement automatique robotisé, étant donné l'accessibilité directe à la broche par 4 faces.

D'autres particularités et avantages de l'invention ressortiront de la description qui suit, donnée à titre indicatif et sans caractère limitatif, se rapportant aux dessins annexés dans lesquels :

- la figure 1 montre en perspective une unité centrale comportant une broche fixe et une colonne porte-outils selon l'invention ;
- la figure 2 montre en perspective la définition d'une unité centrale comportant une broche fixe et deux colonnes porte-outils selon l'invention ;
- la figure 3 illustre le guidage linéaire hydrostatique selon l'invention ;
- la figure 4 montre la répartition des pressions sur les lobes du guidage linéaire hydrostatique selon l'invention ;
- la figure 5 montre une coupe suivant AA de l'unité centrale de la figure 1, avec une variante de réalisation pour la broche ;
- la figure 6 montre la décomposition des mouvements des axes pour obtenir un mouvement Y selon l'invention ;
- la figure 7 montre en perspective une unité centrale comportant une broche fixe et une colonne porte outils selon l'invention, unité munie d'un axe Y et d'un axe C.

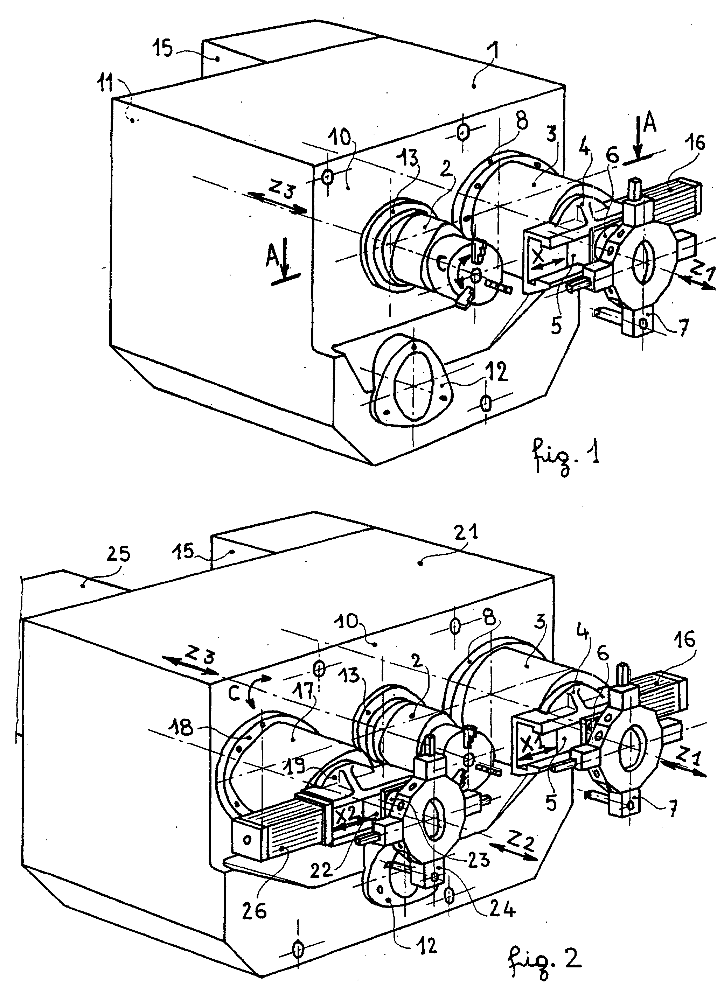

On a représenté sur la figure 1 une possibilité de conception d'une unité centrale d'usinage à laquelle s'applique l'invention.

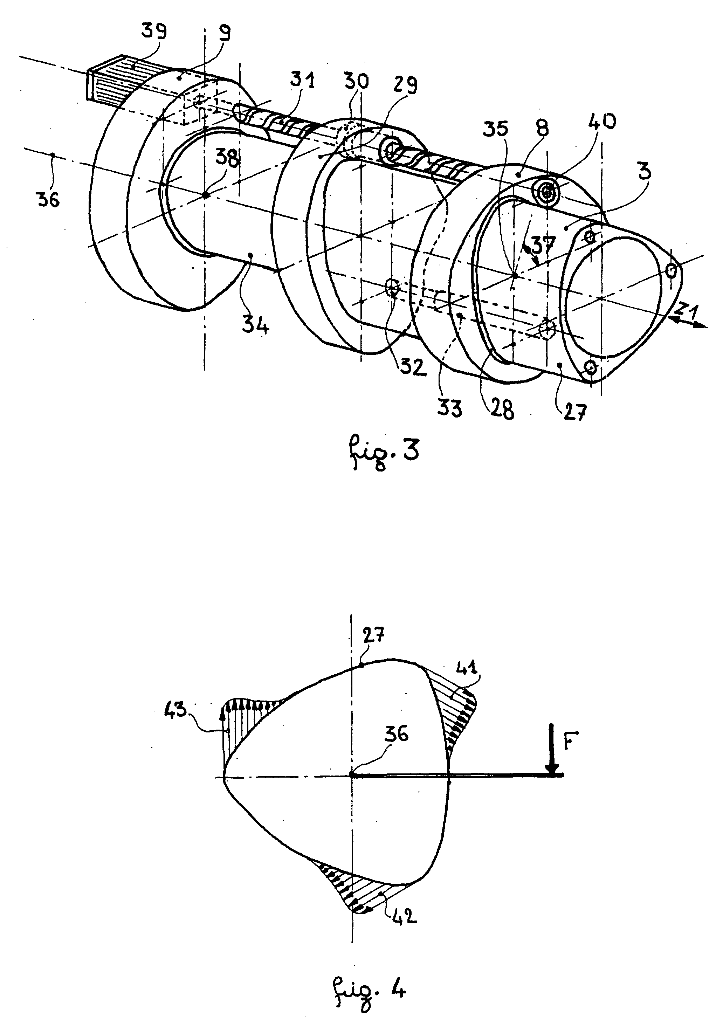

Le bloc 1 en granit naturel ou en composite de granit et résine polymère supporte une broche à moteur intégré 2 ainsi qu'un ensemble chariot/traînard constitué d'une colonne 3 munie en son extrémité d'un coulisseau 4 sur lequel se déplace suivant un axe transversal X une coulisse 5 dans laquelle est intégrée la tourelle 6 de distribution d'outils de coupe 7 (par exemple 12). La colonne 3 est guidée longitudinalement sur l'axe longitudinal Z1 par deux paliers 8 et 9 (cf. aussi figures 3 à 5). Ces deux paliers sont fixés sur deux surfaces parfaitement planes et parallèles 10 et 11 du bloc 1. La précision de parallélisme de ces deux faces est le seul élément de précision relatif à ce bloc de base.

Une troisième face d'appui 12 permet de venir fixer les options contre-pointe ou système de chargement.

Le profil extérieur polygonal du corps de broche 2 selon l'invention permet dans certaines configurations de machines soit pour l'approvisionnement automatique du tour en matière brute sous forme de barres, soit pour permettre le chargement de tours bi-broche ou encore de remplacer l'axe Z1, de rendre la broche 2 mobile selon un axe Z2. Le corps de broche 2 est alors guidé par un ensemble de deux paliers hydrostatiques respectivement avant 13 et arrière (le palier arrière se situant en appui sur la face 11 et n'étant pas représenté), de façon identique au guidage de la colonne 3.

Selon l'exemple de réalisation représenté, pour obtenir un ensemble autonome, les moteurs ont été intégrés dans la mécanique et leurs variateurs insérés dans un coffret 15 fixé directement à l'arrière sur le bloc 1. Les réglages de la chaîne d'asservissement dont dépendent la précision et les performances de vitesses et d'accélérations de la machine sont donc complètement intégrés dans l'unité centrale, ce qui permet de prévoir la vente de cette unité à des partenaires constructeurs de biens d'équipement afin de l'adapter, par intégration dans une machine de sa conception, aux spécificités de son marché local, notamment en ce qui concerne les normes de sécurité, l'interface homme-machine, et le type de commande numérique.

La figure 2 montre en perspective une unité centrale comportant une broche fixe 2 et deux colonnes porte-outils selon l'invention. Sur un bloc massif 21 plus profond que le bloc 1 mais pouvant être issu d'un moule commun qui sera cloisonné pour la coulée du bloc 1, est positionnée une seconde colonne 17 parfaitement identique à la colonne 3. Elle est également guidée sur deux paliers hydrostatiques avant 18 et arrière (non représenté) respectivement identiques aux paliers 8 et 9. Elle est munie en son extrémité d'un coulisseau 19 (identique à 4) sur lequel se déplace suivant un axe transversal X2 une coulisse 22 (identique à 5) dans laquelle est intégrée la tourelle 23 (identique à 6) de distribution d'outils de coupe 24 (par exemple 12). De même les moteurs sont intégrés dans la mécanique et leurs variateurs insérés dans un coffret 25 fixé directement à l'arrière sur le bloc 21. Il est donc possible d'utiliser des éléments parfaitement identiques dans les deux ensembles d'outils, d'où une diminution appréciable des coûts de production et des stocks.

La figure 3 est une vue détaillée en perspective d'une réalisation d'un axe longitudinal réalisé suivant l'invention. La colonne de guidage 3 est un cylindre qui comprend trois sections coaxiales différentes:

La première section 27, à l'avant, est de forme continûment convexe à trois lobes selon l'invention ; elle permet d'assurer la prise de couple au plus près de l'effort de coupe et est guidée par un palier hydrostatique avant 8 déterminant un premier point 35 de l'axe 36 de la colonne ainsi que son orientation 37. La pénétration des copeaux dans le palier est arrêtée par un joint racleur à profil continu 28. La régularité de la forme extérieure de la surface de la colonne 3 assure sa précision et l'efficacité du racleur 28.

La deuxième section 29, intermédiaire, est élargie radialement pour former deux oreilles. La première assure la fixation d'un écrou 30 coopérant avec une vis à billes 31. La seconde oreille assure la fixation d'un point mobile 32 d'un système de mesure 33 de position de l'axe.

La troisième section 34, à l'arrière, est circulaire ; elle doit uniquement localiser un deuxième point 38 de référence de l'axe 36 de la colonne. Elle est guidée de manière hydrostatique par le palier 9. Selon cet exemple le moteur de commande 39 de l'axe numérique est intégré sur le palier 9, son rotor étant fretté directement sur la vis à billes 31 pour éviter tout système d'accouplement supplémentaire, ce qui permet de maîtriser l'inertie de l'axe et de diminuer le nombre de pièces entrant dans la nomenclature de la machine. Il est avantageux de réaliser le palier 40, palier de référence axiale de l'axe, dans le palier avant 8, de telle manière que les échauffements de la vis à billes par le moteur ne nuisent pas à la précision de l'axe.

La figure 4 montre la répartition des pressions sur les lobes du guidage linéaire hydrostatique selon l'invention. Les zones de pressions 41, 42 et 43 étant axi-symétriques quelle que soit la position de l'effort F à encaisser, il n'y a pas de déplacement de l'axe 36 sous l'effort de coupe.

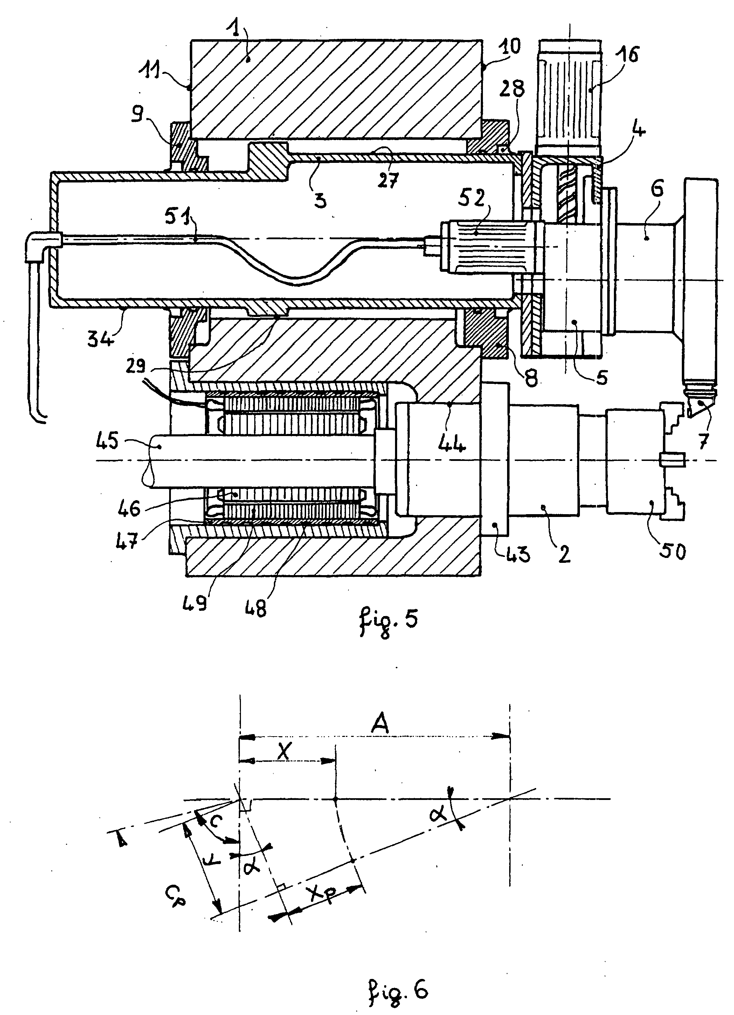

La figure 5 montre une coupe suivant AA de la figure 1 d'une unité centrale dans une variante à deux axes conçue selon l'invention. Cette unité centrale est formée d'une broche 2, fixe longitudinalement dans cette variante, broche fixée au bloc massif 1 par l'intermédiaire d'une bride 43 et centrée par le cylindre 44. A l'arrière de la broche, sur son arbre 45, est fretté le rotor 46 du moteur d'entraînement. Dans une fourrure 47 de refroidissement par circulation d'eau glycolée dans la gorge spiralée 48, est fretté le stator 49 du moteur. A l'avant, un mandrin de serrage 50 permet de tenir la pièce pendant le processus d'usinage.

La colonne 3 guidée sur les paliers 8 et 9 constitue une excellente protection pour le passage et le débattement des câbles et tuyauteries 51 et pour le moteur 52 de la tourelle 6.

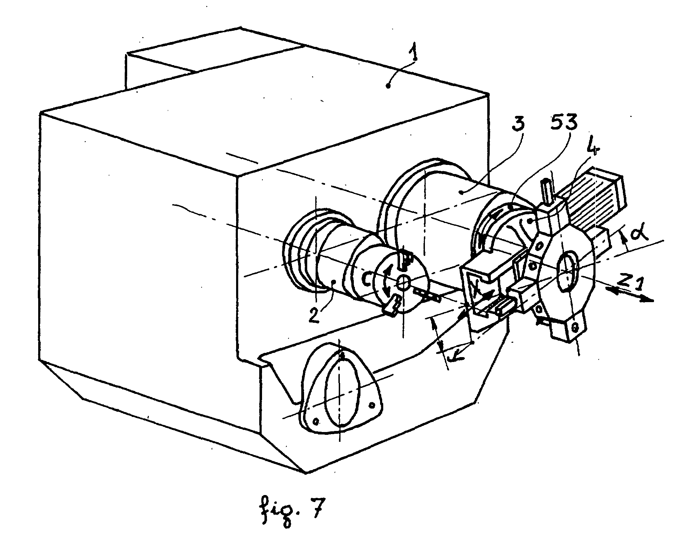

La figure 6 montre la décomposition géométrique des mouvements des axes pour obtenir un mouvement Y selon l'invention. L'extrémité de la colonne supportant la tourelle porte-outils peut être avantageusement munie d'une couronne 53 d'orientation du coulisseau, de l'axe X, ce qui permet, par calcul numérique, de piloter un axe supplémentaire dénommé Y perpendiculaire à l'axe X et à l'axe Z (cf. aussi figure 7). Si A est la distance entre l'axe de rotation de la pièce, axe déterminé par l'axe de la broche 2, et l'axe d'orientation de la couronne, on a :

$$Y = A \sin \alpha$$

$\alpha$ étant l'angle d'inclinaison de coulisseau 4. Il faudra prendre en compte une correction sur l'axe X :

$$X = A.\cos\alpha - (A-Xp) = Xp-A(1- \cos\alpha)$$

Xp étant la valeur lue par le système de positionnement de l'axe X et Xp la valeur réelle obtenue sur la pièce

et compenser la valeur d'orientation angulaire de la pièce:

$$C = Cp + \alpha = Cp+Arc \sin(Y/A)$$

Cp étant la valeur lue par le système d'orientation de la pièce (axe C) et Cp la valeur réelle obtenue sur la pièce.

La figure 7 montre en perspective la définition d'une unité centrale comportant une broche fixe et d'une colonne porte-outils selon l'invention, unité munie d'un axe Y et d'un axe C. La broche est positionnée angulairement par le moteur intégré, la position étant lue par un capteur intégré au moteur suivant un principe connu de la profession. Entre la colonne 3 et le coulisseau 4 est insérée une couronne d'orientation 53 comprenant un moteur et un codeur angulaire de précision 1/1000ème de degré.

**Revendications**

1. Dispositif pour l'usinage d'une pièce par enlèvement de copeaux, du type comportant un châssis et un moyen de déplacement longitudinal et de positionnement du type polylobé,
**caractérisé en ce que** le châssis est un bloc massif (1) comportant un premier forage dans lequel est logée une colonne coulissante porte-outil (3) guidée dans un palier avant (8) et un palier arrière (9), au moins le palier avant (8) et la section (27) de colonne (3) glissant dans celui-ci étant de section continûment convexe à trois lobes répartis à 120° autour d'un axe central, et un deuxième forage d'axe parallèle à l'axe du premier forage, dans lequel est positionnée une broche porte-pièce (2), de préférence à moteur intégré.

2. Dispositif selon la revendication 1, **caractérisé en ce que** les paliers avant (8) et arrière (9) sont des paliers hydrostatiques.

3. Dispositif selon l'une quelconque des revendications 1 ou 2, **caractérisé en ce que** la colonne (3) supporte un coulisseau (4) sur lequel est montée une coulisse (5) dans laquelle est intégrée une tourelle (6) de distribution d'outils de coupe (7).

4. Dispositif selon la revendication 3, **caractérisé par** une couronne d'orientation (53) interposée entre la colonne (3) de guidage et le coulisseau (4).

5. Dispositif selon l'une quelconque des revendications 1 à 4, **caractérisé en ce que** la broche (2) est montée dans une colonne coulissante de même type que la colonne (3) du premier forage.

6. Dispositif selon l'une quelconque des revendications 1 à 5, combinée à la revendication 3, **caractérisé en ce que** le bloc (1) comporte un troisième forage dans lequel est logée une deuxième colonne porte-outil coulissante (17) équipée d'un coulisseau (19) et d'une coulisse (22) portant une tourelle (23) de distribution d'outils de coupe (24).

7. Dispositif selon l'une quelconque des revendications précédentes, **caractérisé en ce que** le bloc (1) est réalisé en granit naturel ou en granit reconstitué.

8. Machine d'usinage, **caractérisée en ce qu'**elle comprend au moins un dispositif selon l'une quelconque des revendications précédentes, disposé horizontalement ou verticalement.

9. Machine d'usinage selon la revendication 8, **caractérisée en ce qu'**elle comporte deux dispositifs à broches se faisant face, constituant une machine de tournage bi-broche à axe horizontal.

**Patentansprüche**

1. Vorrichtung zur spanenden Bearbeitung eines Werkstücks mit einem Gestell und einem Mittel zur Längsverschiebung und Positionierung in mehrlappiger Ausführung,
**dadurch gekennzeichnet, daß** das Gestell ein massiver Block (1) ist, der eine erste Bohrung enthält, in der eine in einem vorderen Lager (8) und einem hinteren Lager (9) geführte, gleitend verschiebbare Werkzeughaltersäule (3) aufgenommen ist, wobei wenigstens das vordere Lager (8) und der darin gleitend geführte Abschnitt (27) der Säule (3) einen durchgehend konvexen Querschnitt mit drei in einem Winkel von 120° um eine Mittelachse verteilten Lappen aufweisen, und eine zweite Bohrung mit einer zur Achse der ersten Bohrung parallelen Achse, in der eine Werkstückhalterspindel (2), vorzugsweise mit integriertem Motor, positioniert ist.

2. Vorrichtung nach Anspruch 1, **dadurch gekennzeichnet, daß** die vorderen (8) und hinteren (9) Lager hydrostatische Lager sind.

3. Vorrichtung nach einem der Ansprüche 1 oder 2, **dadurch gekennzeichnet, daß** die Säule (3) einen Schlitten (4) trägt, auf dem ein Schieber (5) gelagert ist, in den ein Revolverkopf (6) zur Verteilung von Schneidwerkzeugen (7) integriert ist.

4. Vorrichtung nach Anspruch 3, **gekennzeichnet durch** einen zwischen der Führungssäule (3) und dem Schlitten (4) eingefügten Drehkranz (53).

5. Vorrichtung nach einem der Ansprüche 1 bis 4, **dadurch gekennzeichnet, daß** die Spindel (2) in einer gleitend verschiebbaren Säule der gleichen Art wie die Säule (3) der ersten Bohrung gelagert ist.

6. Vorrichtung nach einem der Ansprüche 1 bis 5, kombiniert mit Anspruch 3, **dadurch gekennzeichnet, daß** der Block (1) eine dritte Bohrung enthält, in der eine zweite gleitend verschiebbare Werkzeughaltersäule (17) aufgenommen ist, die mit einem Schlitten (19) und einem Schieber (22) ausgerüstet ist, der einen Revolverkopf (23) zur Verteilung von Schneidwerkzeugen (24) trägt.

7. Vorrichtung nach einem der vorangehenden Ansprüche, **dadurch gekennzeichnet, daß** der Block (1) aus Naturgranit oder aus rekonstruiertem Granit ausgeführt ist.

8. Bearbeitungsmaschine, **dadurch gekennzeich-**

**net, daß** sie wenigstens eine horizontal oder vertikal angeordnete Vorrichtung nach einem der vorangehenden Ansprüche umfaßt.

9. Bearbeitungsmaschine nach Anspruch 8, **dadurch gekennzeichnet, daß** sie zwei Vorrichtungen mit gegenüberliegenden Spindeln umfaßt, die eine Zweispindel-Drehmaschine mit horizontaler Achse bilden.

**Claims**

1. A device for machining a part by metal cutting, of the type comprising a chassis and means for longitudinal displacement and positioning of the polylobar type **characterised in that** the chassis is a solid block (1) having a first bore in which a tool-holder sliding column (3) guided by a front bearing (8) and a rear bearing (9) is housed, at least the front bearing (8) and the section (27) of column (3) sliding in the latter being of continuously convex cross-section with three lobes distributed at 120° intervals around a central axis, and a second bore having an axis parallel to the axis of the first bore, in which a workpiece spindle (2), preferably having an integral motor, is positioned.

2. A device according to Claim 1, **characterised in that** the front (8) and rear (9) bearings are hydrostatic bearings.

3. A device according to any one of Claims 1 or 2, **characterised in that** the column (3) supports a slider (4) on which a slide (5) is mounted, in which slide a turret head (6) with distributed cutting tools (7) is integrated.

4. A device according to Claim 3, **characterised by** a live ring (53) inserted between the guide column (3) and the slider (4).

5. A device according to any one of Claims 1 to 4, **characterised in that** the spindle (2) is mounted in a sliding column of the same type as the column (3) of the first bore.

6. A device according to any one of Claims 1 to 5, in combination with Claim 3, **characterised in that** the block (1) has a third bore in which a second sliding tool-holder column (17) equipped with a slider (19) and a slide (22) carrying a turret head (23) with distributed cutting tools (24) is housed.

7. A device according to any one of the preceding claims, **characterised in that** the block (1) is made of natural granite or of reconstituted granite.

8. A machining centre, **characterised in that** it comprises at least one device according to any one of the preceding claims, arranged horizontally or vertically.

9. A machining centre according to Claim 8, **characterised in that** it comprises two turret heads face-to-face, making up a two-turret-head lathe having a horizontal axis.

fig. 1

fig. 2

fig. 3

fig. 4

fig. 5

fig. 6

fig. 7